Europäisches Patentamt

European Patent Office

Office européen des brevets

(11) Publication number: **0 267 515**
**A2**

# (12) EUROPEAN PATENT APPLICATION

(21) Application number: 87116104.8

(22) Date of filing: 02.11.87

(51) Int. Cl.⁴ **B41M 5/00** , **A61C 9/00**

(30) Priority: 10.11.86 US 930345

(43) Date of publication of application:
18.05.88 Bulletin 88/20

(84) Designated Contracting States:
AT BE CH DE ES FR GB GR IT LI LU NL SE

(71) Applicant: Dental Ventures of America Inc.
6200 E. Canyon Rim Road Suite 112-E
Anaheim Hills, Ca. 92807(US)

(72) Inventor: Rich, Clifford L.
9222 North 54th Drive
Glendale, Arizona 85302(US)

(74) Representative: Patentanwälte Müller-Boré,
Deufel, Schön, Hertel, Lewald, Otto
Postfach 26 02 47 Isartorplatz 6
D-8000 München 26(DE)

(54) Disposble marking device.

(57) There is disclosed by the present invention, a marking material having a multi-plied structure. Generally, the present invention is provided with four adjacent layers. There is provided a support layer having a pressure sensitive marking medium disposed on an outer surface thereof. The support layer may consist of a suitable thin plastic or paper material. The support layer is backed with an adhesive layer for adhering the articulating paper to teeth molds. The adhesive layer is, in turn, backed with a release backing which is peeled off to expose the adhesive layer prior to use.

EP 0 267 515 A2

## DISPOSABLE MARKING DEVICE

### BACKGROUND OF THE INVENTION

This invention relates generally to a pressure sensitive marking device for marking a surface to be aligned. More specifically the present invention relates to a new form of marking material for use in making dental prostheses, marking machine parts which require adjustment to provide a close fit or marking virtually any surface which may need to be closely fitted to another surface. More particularly, and according to the preferred embodiment of the present invention, the present invention relates to dental articulation paper for marking opposing teeth which permits the dental technician to make an accurate alignment of a dental patient's bite.

It has been found that conventional dental articulation papers are cumbersome to use in that they require the dental technician to insert the paper, make the impression, remove the paper and grind away the marked dental material to insure a correct bite alignment. Moreover, traditional dental articulation papers typically do not provide a marking medium which will make multiple impressions of the opposing teeth without removing the articulation paper.

When making a dental prosthesis, a dental technician will cast the patient's teeth mold by taking a mandibular and maxillary impression of the patient's mouth. These molds are then used to fashion the dental prosthesis in such a manner as to insure that the dental prosthesis will comfortably conform to the patient's mouth. A primary purpose of dental articulation paper is to mark any high spots in the dental prosthesis so that these high spots may be ground to conform with the opposing teeth, thereby making the patient's bite more comfortable and efficacious. It is important, therefore, to provide a dental articulation paper which is capable of repeatedly marking the opposing teeth, thereby permitting the dental professional to simultaneously work on the grind down of any high spots on the prosthesis while continuously checking for proper bite alignment between the dental prosthesis and opposing teeth.

### SUMMARY OF THE INVENTION

Accordingly, it is an object of the present invention to provide a marking material which will provide an image of a pressure creating surface on any opposing surface.

It is a more specific object of the present invention to provide a marking material which permits the adjustment or alignment of opposing surfaces.

It is another more specific object of the present invention to provide a marking material for marking the alignment of machinery, carpentry, dental or other surfaces where close alignment of opposing surfaces is required.

It is a more specific object of the present invention to provide a dental articulation paper which will repeatedly and reproducibly mark the dental prosthesis.

It is still another object of the present invention to provide a dental articulation paper which will make continuous impressions without needs for repositioning the paper in the teeth molds.

It has been found in accordance with the invention that a dental technician may be more efficient in making dental prosthesis where the dental articulation paper is adhesively disposed on the teeth opposing the dental prosthesis so that the technician may continuously and repeatedly make an impression on the prosthesis and grind the prosthesis to conform to the opposing teeth.

The above and other objects, features and advantages of the present invention will be more apparent from the following more detailed description of a preferred embodiment of the present invention with reference to the accompanying drawings.

### BRIEF DESCRIPTION OF THE DRAWINGS

Figure 1 is a perspective view of a marking material according to the present invention, in the form of dental articulation paper in position in a dental mold showing maxillary and mandibular teeth molds in phantom.

Figure 2 is a cross-sectional view of the marking material according to the present invention.

### DETAILED DESCRIPTION OF THE PREFERRED EMBODIMENT

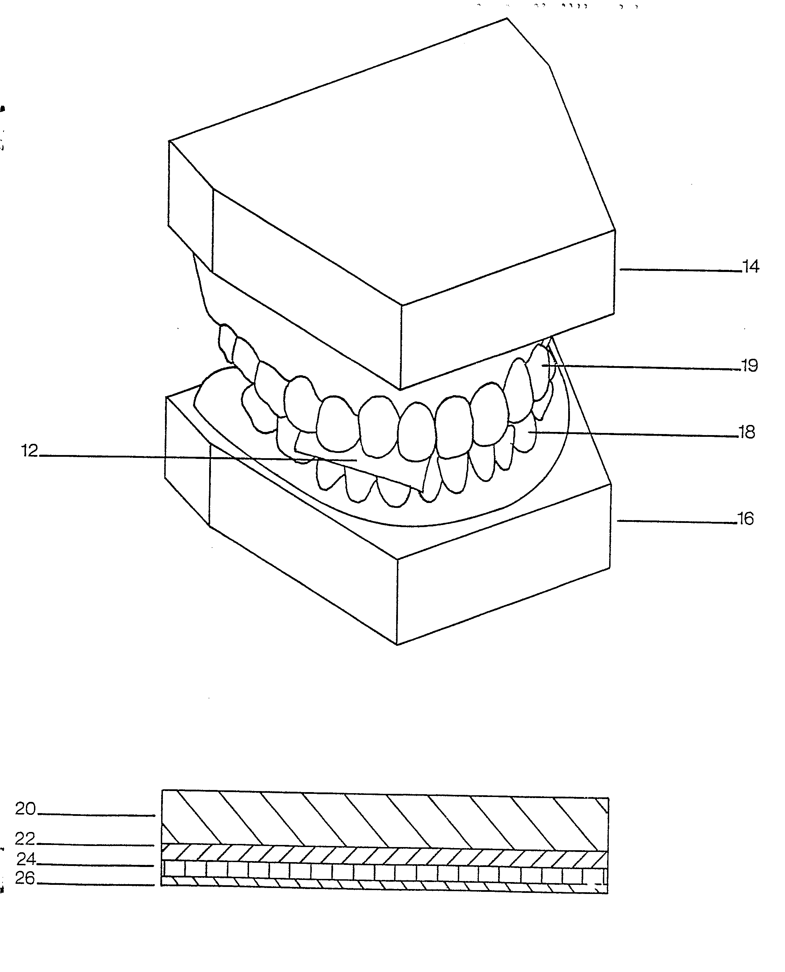

With reference to accompanying Figures 1 and 2 reference numeral 12 refers to a marking material for marking a contact surface of an opposing surface. As illustrated in application with reference to Figure 1, there is shown a dental articulating paper. The purpose of dental articulation paper is to permit a dentist or dental technician to determine whether any portion of the contact surface of a tooth or dental prosthesis is non-conforming to the contact surface of the opposing teeth. Dental articulation paper typically consists of a pressure sensitive marking medium such as carbon, ink or the like. In use, and with particular reference to Figure 1, dental articulation paper 12 is inserted in teeth mold 10 which consists of upper 14 and lower 16 teeth molds, which carry a maxillary mold impression 19 and mandibular mold impression 18 of the patient's teeth or prosthesis. The upper teeth mold 14 is then lowered onto the lower teeth mold 16 simulating a patient's natural bite. The pressure exerted between the two molds causes contact between the opposing teeth. If any high spots exist on the contact surface of the teeth, these high spots will contact the opposing teeth before the remaining teeth and cause an unnatural and uncomfortable bite. By inserting the dental articulation paper between the dental prosthesis or the maxillary and mandibular teeth molds, it is possible to mark the high spots on the contact surface of the dental prosthesis or teeth with the pressure sensitive marking medium. Once marked, the high spots, as identified by the marking medium transferred to the dental prosthesis, are then ground down by the dentist or dental technician, and the bite rechecked with the articulation paper. This process is repeated until the bite simulates the patient's natural bite without any high spots on the contact surfaces.

According to a preferred embodiment of the present invention, and with reference to Figure 2, there is disclosed a marking material 12 having a multi-plied structure. Generally, the marking material of the present invention comprises four adjacent layers including a support layer 24 having a pressure sensitive marking medium 26 disposed on an outer surface thereof. The support layer 24 may consist of a suitable thin plastic or paper material. Preferably, support layer 24 consists of a thin plastic material such as of mylar or an acetate material. Pressure sensitive marking medium 26 may consist of any suitable medium such as a carbonaceous material or an ink-like material capable of transferring a mark at contact positions. Suitable pressure sensitive marking media include micro-encapsulated inks, multi-strike inks, carbon paper or the like. Support layer 24 is backed with a releasable adhesive layer 22 suitable for releasably adhering to dental glass, dental ceramic, plaster, natural teeth or the like. Finally, release backing 20 is provided as a removable backing for the releasable adhesive layer 22. The release backing 20 preferably consists of any suitable and commercially available plasticized paper material which will release from an adhesive backing.

In operation, the user, such as a dental technician, machinist, carpenter or the like, will remove release backing 20, adhere marking material 12 to the surface opposing the contact or pressure creating surface by pressing releasable adhesive layer 22 against the opposing surface. The opposing surfaces are then brought together, such as by closing teeth mold 10 so that the maxillary teeth mold 19 creates pressure on mandibular teeth mold 18, thereby causing the pressure sensitive marking medium 26 to transfer a marking onto the opposing surface to be adjusted or aligned, such as any high spots on a dental prosthesis. Once marking has been made, the user merely parts the opposing surfaces, or teeth mold 10, grinds away high marked spots, adjusts or re-aligns the marked portion of the surface, such as a dental prosthesis and repeats the process until no mark is left by the marking material 12.

The provision of a marking material 12 having a releasable adhesive backing 22 permits the user to work faster and more efficiently. With particular reference to the dental field, the provision of a dental articulation paper 12 having, also, a pressure sensitive marking medium 26 capable of creating multiple impressions at the same contact point obviates the need for the dental technician to remove and reposition the articulation paper, as required by the conventional articulation papers. The dental articulation paper according to the present invention is suited to being supplied in rolled form.

**Claims**

1. A marking material, comprising:
a support layer having an inner side and an outer side;
marking means for transferring an image onto a surface, said marking means being disposed on the outer side of the support layer;
adhesive means for removably adhering the marking material to another surface, said adhesive means disposed on said inner side of said support layer; and
releasable backing means covering said adhesive means.

2. The marking material according to Claim 1, wherein the support layer is of a thin plastic material.

3. The marking material according to Claim 1, wherein said support layer is of a thin paper material.

4. The marking material according to Claim 2, wherein said support layer is of mylar material.

5. The marking material according to Claim 2, wherein said support layer is of an acetate material.

6. The marking material according to Claim 1, wherein said marking means is a layer of pressure sensitive carbonaceous material.

7. The marking material according to Claim 1, wherein said marking means is a layer of pressure sensitive ink material.

8. The marking material according to Claim 7, wherein said pressure sensitive ink material is a micro-encapsulated ink.

9. The marking material according to Claim 1, wherein said releasable backing means is a plasticized paper material capable of releasing from said adhesive means.

14

19

18

12

16

20

22

24

26